# EUROPEAN PATENT APPLICATION

(11) **EP 3 429 168 A1**
(43) Date of publication of application: **16.01.2019**
(21) Application number: 17762550.6
(22) Date of filing: 09.03.2017
(51) Int. Cl.: H04L 29/08

(54) **SECURE COMMUNICATION METHOD AND APPARATUS FOR VEHICLE, VEHICLE MULTIMEDIA SYSTEM, AND VEHICLE**

(30) Priority: 11.03.2016 CN 201610140003
(71) Applicant: BYD Company Limited, Shenzhen 518118 (CN)
(72) Inventor: WU, Xinfeng, Shenzhen Guangdong 518118 (CN); YIN, Jianyin, Shenzhen Guangdong 518118 (CN)
(74) Representative: Gulde & Partner
(86) International application number: PCT/CN2017/076204
(87) International publication number: WO 2017/152864

(57) **Abstract**

The present application discloses a method and a device for vehicle safety communication, a vehicle multimedia system, and a vehicle. The vehicle includes an open system, a security chip and a closed system, the open system and the closed system are connected by the security chip, the method is applied to the security chip, and comprises: receiving a first control instruction from the open system, wherein the first control instruction includes encrypted control data; decrypting the encrypted control data in the first control instruction; obtaining the decrypted control data when the decryption is successful; and replacing the encrypted control data in the first control instruction with the decrypted control data to form a second control instruction, and transmitting the second control instruction to the closed system to make the closed system control the vehicle to perform a target operation according to the second control instruction.

## Description

### CROSS-REFERENCE TO RELATED APPLICATIONS

The present application is proposed on the basis of Chinese patent application No. 201610140003.4 filed on Mar. 11, 2016, and claims the priority of the Chinese patent application, the entire contents of which is hereby incorporated by reference.

### TECHNICAL FIELD

The present application relates to the field of internet of vehicle, and in particular to a method and a device for vehicle safety communication, a vehicle multimedia system and a vehicle.

### BACKGROUND

With the development of large-screen of vehicle multimedia and the popularity of internet of vehicle, 4G and WIFI hotspots, vehicle multimedia has gradually become another important mobile terminal system for vehicle owners. The traditional car-machine closed system having small screens gradually cannot satisfy more and more entertainment and multimedia needs for users. At present, many vehicle multimedia devices are equipped with 4G modules and WIFI modules, and can access the internet and allow customers to install APP applications by themselves. In addition, with the development of big data and cloud services, the technology of remotely controlling vehicles has emerged, wherein the vehicle multimedia is the carrier for accepting cloud services, but this will bring great security risks to customers because there are communication and interconnection between the vehicle multimedia and other components of the vehicle, and the vehicle multimedia will transmit many instructions to control other components of the vehicle, so that once the vehicle multimedia is connected to the internet, the vehicle multimedia will be easily invaded by malicious programs just like a computer and a mobile phone, and the criminals will remotely simulate the cloud server to transmit false instructions to the car. Once the vehicle multimedia is maliciously invaded, the vehicle multimedia may be remotely controlled to transmit false instructions to other components when the owner is driving, affecting the safe driving of the owner. Therefore, it is necessary to carry out necessary information security guarantee when the vehicle multimedia accesses the internet.

### SUMMARY

The object of the present application is to provide a method and a device for vehicle safety communication, a vehicle multimedia system and a vehicle to improve the safety of internet of vehicle communication.

In order to achieve the above object, according to a first aspect of the present application, a vehicle safety communication method is provided, wherein the vehicle comprises an open system, a security chip and a closed system, the open system and the closed system are connected by the security chip, the method is applied to the security chip, and the method comprises: receiving a first control instruction from the open system, wherein the first control instruction comprises encrypted control data; decrypting the encrypted control data in the first control instruction; obtaining decrypted control data when the decryption is successful; and replacing the encrypted control data in the first control instruction with the decrypted control data to form a second control instruction, and transmitting the second control instruction to the closed system to make the closed system control the vehicle to perform a target operation according to the second control instruction.

According to a second aspect of the present application, a vehicle safety communication method is provided, wherein the vehicle comprises an open system, a security chip and a closed system, the open system and the closed system are connected by the security chip, the open system is connected to a server, the method is applied to the server, and the method comprises: receiving original control data from a user terminal, wherein the original control data is used to indicate a target operation to be performed by the vehicle; encrypting the original control data to obtain corresponding encrypted control data; and transmitting the encrypted control data to the open system.

According to a third aspect of the present application, a vehicle safety communication device is provided, wherein the vehicle comprises an open system, a security chip and a closed system, the open system and the closed system are connected by the security chip, the device is provided in the security chip, and the device comprises: a first receiving module, configured to receive a first control instruction from the open system, wherein the first control instruction includes encrypted control data; a first decrypting module, configured to decrypt the encrypted control data in the first control instruction, and obtain decrypted control data when the decryption is successful; and a first transmitting module, configured to replace the encrypted control data in the first control instruction with the decrypted control data to form a second control instruction, and transmit the second control instruction to the closed system to make the closed system control the vehicle to perform a target operation according to the second control instruction.

According to a fourth aspect of the present application, a vehicle safety communication device is provided, wherein the vehicle comprises an open system, a security chip and a closed system, the open system and the closed system are connected by the security chip, the open system is connected to a server, the device is provided in the server, and the device comprises: a third receiving module, configured to receive original control data from a user terminal, wherein the original control data is used to indicate a target operation to be performed by the vehicle; a second encrypting module, configured to encrypt the original control data to obtain corresponding encrypted control data; and a fourth transmitting module, configured to transmit the encrypted control data to the open system.

According to a fifth aspect of the present application, a vehicle multimedia system is provided, wherein the system comprises: an open system for connecting a vehicle to the network and communicating with a server, the open system is used for receiving encrypted control data from the server and transmitting a first control instruction including the encrypted control data; a security chip comprising the vehicle safety communication device according to the third aspect of the present application; and a closed system communicating with the open system via the security chip, the closed system is used for receiving a second control instruction from the security chip, and controlling the vehicle to perform a target operation according to the second control instruction.

According to a sixth aspect of the present application, a vehicle is provided, wherein the vehicle comprises the vehicle multimedia system according to the fifth aspect of the present application.

In the above technical solution, the encrypted control data is transmitted to the open system of the vehicle by the server, and the encrypted control data can be forwarded to the security chip by the open system in order to perform decryption processing by the security chip. Only after the decryption succeeds, the decrypted control data is transmitted to the closed system, and then the closed system will control the vehicle to perform the corresponding operation according to the control data. Thus, the safety of internet of vehicle communication can be improved, and only legal control data can be transmitted to the closed system to prevent the vehicle from being erroneously controlled due to the invasion of the malicious program, thereby ensuring the safety of the vehicle remote control.

Other features and advantages of the present application will be described in detail in the following detailed description.

### BRIEF DESCRIPTION OF THE DRAWINGS

The accompanying drawings are used to provide further understanding of the present application, and to constitute a part of the specification, which are used together with the following detailed description to explain the present application, but do not constitute a limitation to the present application. In the accompanying drawings:
FIG. 1 is a schematic diagram of an implementation environment according to an exemplary embodiment.
FIG. 2 is a structural block diagram of a dual system provided in a vehicle according to an exemplary embodiment.
FIG. 3 is a flowchart of a method for vehicle safety communication according to an exemplary embodiment.
FIG. 4 is a flow chart of another method for vehicle safety communication according to an exemplary embodiment.
FIG. 5 is a diagram showing a signaling interaction among a user terminal, a server, an open system, a security chip, and a closed system during vehicle communication, according to an exemplary embodiment.
Figure 6A is a schematic diagram showing the structure of an example first control instruction.
FIG. 6B is a schematic diagram showing the structure of another example first control instruction.
Figure 6C is a schematic diagram showing the structure of an example second control instruction.
FIG. 7 is a flowchart of a method for vehicle safety communication according to another exemplary embodiment.
FIG. 8 is a schematic diagram showing the structure of an example first execution result instruction.
FIG. 9 is a flowchart of another method for vehicle safety communication according to another exemplary embodiment.
FIG. 10 is a diagram showing a signaling interaction among a user terminal, a server, an open system, a security chip, and a closed system during vehicle communication, according to another exemplary embodiment.
FIG. 11A is a schematic diagram showing the structure of another example first execution result instruction.
FIG. 11B is a schematic diagram showing the structure of an example second execution result instruction.
FIG. 11C is a schematic diagram showing the structure of another example first execution result instruction
FIG. 12 is a block diagram of a vehicle safety communication device according to an exemplary embodiment.
FIG. 13 is a block diagram of a vehicle safety communication device according to another exemplary embodiment.

### DETAILED DESCRIPTION

The specific embodiments of the present application are described in detail below with reference to the accompanying drawings. It is to be understood that the specific embodiments described herein are intended to be illustrative and not restrictive.

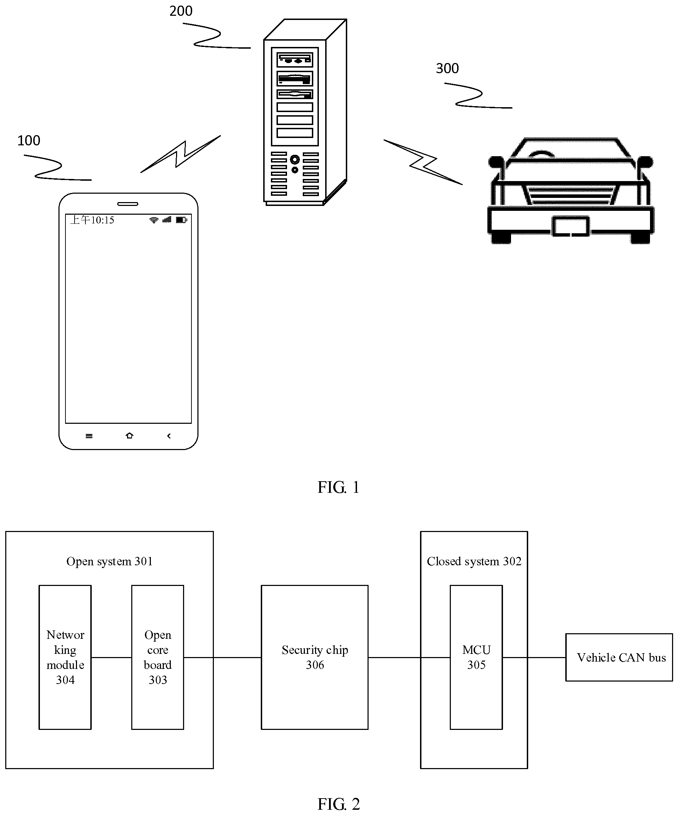

FIG. 1 is a schematic diagram of an implementation environment according to an exemplary embodiment. As shown in FIG. 1, the implementation environment may include a user terminal 100, a server 200, and a vehicle 300.

In the present application, the server 200 may be an electronic device that provides service to the vehicle 300, which may be owned by a service provider of the vehicle 300. A user can register on the server 200 through the user terminal 100 to associate the user terminal 100 with the vehicle 300, so that the user terminal 100 can communicate with the vehicle 300 via the server 200, thereby realizing remote control of the vehicle 300 by the user. In addition, the vehicle 300 can further feed vehicle-related data back to the server 200 so that the service provider can perform remote maintenance to the vehicle 300, and if necessary, the server 200 can also feed the vehicle-related data back to the user terminal 100, thereby enabling the user to be able to keep track of the condition of the vehicle.

In the present application, the user terminal 100 may be an electronic device capable of connecting to the network and communicating with the server 200. The user terminal 100 can be, for example, a smart phone, a tablet, a PC, a laptop, and the like. In FIG. 1, the user terminal 100 is shown as a smart phone.

In order to improve the security of the vehicle 300 when it is connected to the network, in the embodiment of the present application, the vehicle 300 is provided with a vehicle multimedia system having a dual system, and FIG. 2 is a structural block diagram of a vehicle multimedia system provided in the vehicle according to an exemplary embodiment. As shown in FIG. 2, the vehicle multimedia system can include an open system 301 and a closed system 302. Wherein, the open system 301 is used for the vehicle 300 to connect to the network and communicate with an external device (for example, the server 200), and allow the user to install various APPs according to their own preferences. For example, the open system 301 may be configured with an open core board 303 and a networking module 304 (the networking module 304 may be, for example, a WiFi module, a GPS module, a 3G module, a 4G module, etc.), wherein the open core board 303 is connected with the networking module 304 and can execute networking operations through the networking module 304 to communicate with external devices (e.g., server 200).

The closed system 302 is not allowed to access the internet and is used to interactively communicate with the vehicle. For example, the closed system 302 can be configured with a micro control unit MCU 305 for the vehicle 300, and the MCU 305 can be connected to the vehicle CAN bus. Through the CAN bus, the micro control unit MCU 305 can control the vehicle operation, and get vehicle data from the CAN bus. The open system 301 and the closed system 302 can each keep operating independently. In addition, the open system 301 and the closed system 302 can be connected by a security chip 306. For example, the open core board 303 and the MCU 305 are connected by the security chip 306. Wherein, the open core board 303 and the security chip 306 can be connected through an SDIO (Secure Digital Input Output) interface, and the security chip 306 and the MCU 305 can be connected through an SPI (Serial Peripheral Interface) standard interface. In an exemplary embodiment of the present application, the security chip 306 may choose an SSX1207 type security chip, which may provide services such as data encryption, identity authentication, limited security storage, and the like. Through the security chip 306, the security of the vehicle when it is connected to the network can be improved.

It should be noted that, as an example, both the open system 301 and the closed system 302 described in the present application may be an operating system. For example, the open system 301 can be an Android system and the closed system 302 can be a Linux system. It should be understood that this example is merely illustrative of the open system 301 and the closed system 302 and does not define the two systems. For example, the open system 301 can be a Linux system, the closed system 302 can be an Android system, or both can be an Android system, and so on.

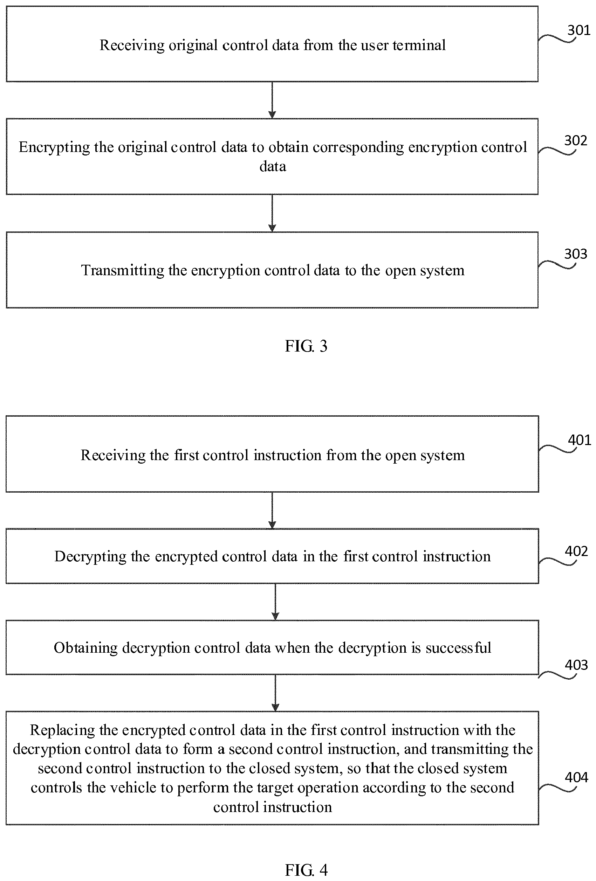

FIG. 3 is a flowchart of a method for vehicle safety communication according to an exemplary embodiment, wherein the method may be applied to a server, for example, the server 200 shown in FIG. 1. As shown in FIG. 3, the method can include the following steps.

In step S301, original control data from the user terminal is received, wherein the original control data is used to indicate a target operation to be performed by the vehicle.

In the present application, the target operations may include, but are not limited to, the following: unlocking, starting, accelerating, decelerating, shutting down, locking car, window lifting, multimedia device control (starting, volume adjustment, switching multimedia files, etc.), and the like.

In step S302, the original control data is encrypted to obtain corresponding encrypted control data.

The server and the security chip may have a pre-agreed encryption protocol, so that the server may perform encryption processing on the received original control data according to the encryption protocol, and obtain the encrypted control data.

In step S303, the encrypted control data is transmitted to the open system.

After receiving the encrypted control data, the open system may generate a first control instruction and make the received encrypted control data be contained in the first control instruction. Thereafter, the open system transmits the first control instruction to the security chip to perform security authentication on the encrypted control data by the security chip.

FIG. 4 is a flowchart of another method for vehicle safety communication according to an exemplary embodiment, wherein the method may be applied to a security chip, for example, the security chip 306 shown in FIG. 2. As shown in FIG. 4, the method can include the following steps.

In step S401, a first control instruction from the open system is received, wherein the first control instruction includes encrypted control data.

In step S402, the encrypted control data in the first control instruction is decrypted.

As previously mentioned, the server and the security chip can have a pre-agreed encryption protocol, so that the security chip can decrypt the encrypted control data in the received first control instruction according to the encryption protocol.

In step S403, when the decryption is successful, decrypted control data is obtained.

In step S404, the encrypted control data in the first control instruction is replaced with the decrypted control data to form a second control instruction, and the second control instruction is transmitted to the closed system, so that the closed system controls the vehicle to perform a target operation according to the second control instruction.

For example, if the original control data received by the server from the user terminal is used to indicate that the target operation to be performed by the vehicle is an unlocking operation, then if the security chip decrypts successfully, the second control instruction transmitted to the closed system may also indicate that the target operation to be performed by the vehicle is the unlocking operation. After the second control instruction is received, the closed system (for example, the MCU) is able to known that the target operation is the unlocking operation by analyzing the second control instruction, and then the closed system can transmit an unlock instruction to the CAN bus. The unlocking component in the vehicle is capable of acquiring this unlocking instruction from the CAN bus, and performs the unlocking operation according to the unlocking instruction, thereby completing the unlocking operation of the vehicle.

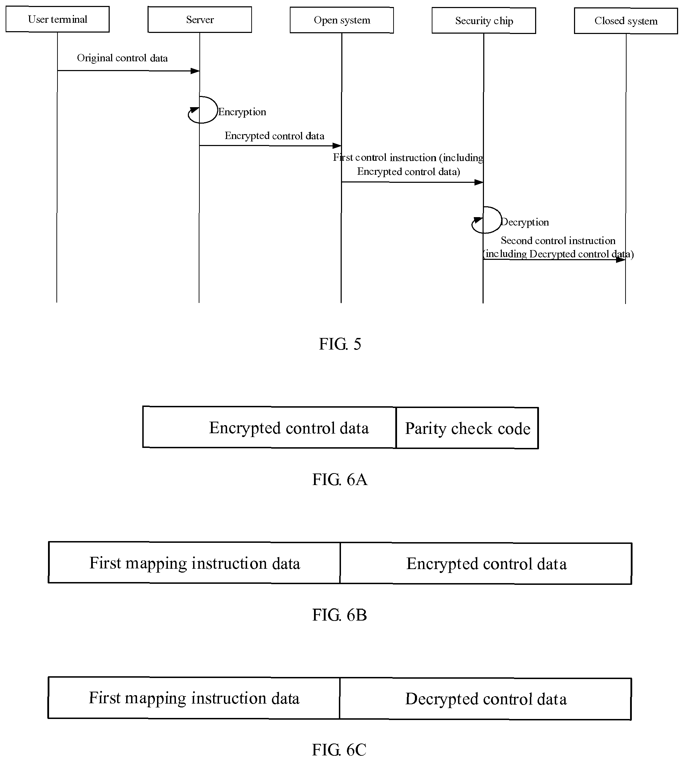

FIG. 5 is a diagram showing a signaling interaction among a user terminal, a server, an open system, a security chip, and a closed system during vehicle communication, according to an exemplary embodiment. Wherein, the user terminal is, for example, the user terminal 100 shown in FIG. 1, the server is, for example, the server 200 shown in FIG. 1, the open system is, for example, the open system 301 shown in FIG. 2, the security chip is, for example, the security chip 306 shown in FIG. 2, and the closed system is, for example, the closed system 302 shown in FIG. 2. Figure 5 relates to the above steps using for the method for vehicle safety communication for the server and the security chip, and thus its specific signaling interaction process will not be described in detail herein.

Furthermore, although not shown in FIG. 4, the above method for vehicle safety communication applied to the security chip may further include not transmitting any control instruction to the closed system when the decryption fails. That is, once the decryption fails, the security chip can intercept instructions from the open system. For example, when a malicious program invades the open system and impersonates the open system to transmit a control instruction, the control instruction will not be transmitted to the closed system due to the protection of the security chip, thereby ensuring the security of the closed system and the vehicle.

In the above technical solution, the encrypted control data is transmitted to the open system of the vehicle by the server, and the encrypted control data can be forwarded to the security chip by the open system in order to perform decryption processing by the security chip. Only after the decryption succeeds, the decrypted control data is transmitted to the closed system, and then the closed system will control the vehicle to perform the corresponding operation according to the control data. Thus, the safety of internet of vehicle communication can be improved, and only legal control data can be transmitted to the closed system to prevent the vehicle from being erroneously controlled due to the invasion of the malicious program, thereby ensuring the safety of the vehicle remote control.

In some alternative embodiments, the security chip can count the number of decryption failure. When the number of decryption failure reaches a preset number of times (for example, ≥1), it indicates that the open system may have a large potential security risk at this time. In this case, the security chip can transmit a restart instruction and/or an anti-virus instruction to the open system, wherein the restart instruction can be used to control the open system to perform a restart operation, and the anti-virus instruction can be used to control the open system to perform an anti-virus operation. In this way, the potential security risk of the open system can be relieved to a certain extent, and the malicious program is prevented from threatening the security of the open system for a long time.

In addition, in some optional embodiments, the server may further calculate a parity check code of the original control data after receiving the original control data. Then, the parity check code is transmitted to the open system. After receiving the parity check code of the original control data, the open system may make the parity check code contained in the first control instruction together with the encrypted control data. For example, the structure of the first control instruction at this time may be as shown in FIG. 6A. After receiving the first control instruction, the security chip may first decrypt the encrypted control data therein, and if the decryption is successful, the decrypted control data can be obtained. Thereafter, the security chip can calculate the parity check code of the decrypted control data. In theory, the decrypted control data should be identical to the original control data, so the parity check codes of both should be the same. When the parity check code included in the first control instruction is consistent with the parity check code of the decrypted control data, at this time, the security chip may further determine that the received first control instruction is a legal instruction, and therefore, the encrypted control data in the first control instruction can be replaced with the decrypted control data to form a second control instruction, and the second control instruction is transmitted to the closed system. When the parity check code included in the first control instruction is inconsistent with the parity check code of the decrypted control data, at this time, the security chip may determine that the received first control instruction is an illegal instruction, and at this time, the instruction may be intercepted, and no instructions is transmitted to the closed system, thereby ensuring the safety of the vehicle.

Through the above embodiments, the identification accuracy of the legal instruction can be further improved, and the possibility of erroneously identifying an illegal instruction as a legal instruction can be reduced, thereby further improving the safety of the vehicle.

As previously mentioned, the user can transmit the original control data to the server through the user terminal, wherein the original control data can be used to indicate the target operation to be performed by the vehicle. In some embodiments of the present application, different target operations may have different security levels, and the security level of the target operation can be used to indicate whether the target operation is a sensitive operation.

In one embodiment, the server may directly encrypt the original control data regardless of the security level of the target operation indicated by the original control data. Alternatively, in another embodiment, the server may selectively encrypt the original control data based on whether the target operation indicated by the original control data is a sensitive operation.

For example, after receiving the original control data, the server may determine the security level information of the original control data according to the target operation indicated by the original control data, wherein the security level information may be used to indicate whether the original control data is sensitive data. For example, a sensitive operation list may be pre-stored in the server, so that after receiving the original control data, the server can learn the target operation information by analyzing the original control data. The server can then query the sensitive operation list. If the target operation information is found in the sensitive operation list, it indicates that the target operation is a sensitive operation. Accordingly, the original control data is sensitive data. If the target operation information is not found in the sensitive operation list, it indicates that the target operation is a non-sensitive operation. Accordingly, the original control data is non-sensitive data.

When the security level information of the original control data indicates that the original control data is sensitive data, the server encrypts the original control data to obtain the corresponding encrypted control data. That is, the encryption processing operation is only for the sensitive data. When the security level information of the original control data indicates that the original control data is non-sensitive data, the server may not encrypt the original control data, and directly transmit the original control data to the open system.

When the server transmits the encrypted control data or the original control data to the open system, the security level information of the original control data can also be transmitted to the open system at the same time. For example, the security level information of the original control data is appended to the header of the encrypted control data or the original control data to form a signaling which is then transmitted to the open system. In this way, after receiving the signaling, the open system can determine whether the control data included in the signaling is encrypted or not (i.e., original) by analyzing the header information. When the security level information of the original control data indicates that the original control data is sensitive data, the open system generates and transmits the first control instruction to the security chip, wherein the first control instruction may include the security level information of the original control data and the encrypted control data. When the security level information of the original control data indicates that the original control data is non-sensitive data, the open system may generate and transmit a third control instruction to the security chip, wherein the third control instruction may include security level information of the original control data and the original control data. After receiving the control instruction from the open system, the security chip can learn whether the control data included in the instruction is encrypted by the security level information included therein. If yes, it is determined that the first control instruction is received, and the decryption process is performed according to the method shown in FIG. 4. If not, it is determined that the third control instruction is received, and at this time, the third control instruction is transmitted directly to the closed system without decryption processing.

After the second control instruction or the third control instruction is transmitted to the closed system, the MCU in the closed system can learn in various ways what kind of target operation the control data in the instruction is intended to control the vehicle to perform. For example, in one embodiment, after receiving the second control instruction from the security chip, the MCU in the closed system can extract the decrypted control data from the second control instruction. A control data-operation mapping table may be pre-stored in the MCU, in which at least one operation and control data corresponding to each operation are recorded. The MCU can use the extracted decrypted control data to query the mapping table to learn the corresponding operation from the mapping table, which is the target operation to be performed by the vehicle.

Alternatively, in another embodiment, the server may generate first mapping instruction data after deriving the target operation by analyzing the original control data, wherein the first mapping instruction data may be used to identify the target operation. The server can then transmit the first mapping instruction data to the open system. In this way, the open system can make the first mapping instruction data contained in the first control instruction. For example, the structure of the first control instruction formed at this time is as shown in FIG. 6B. In this way, when the security chip decrypts successfully, the first mapping instruction data may be retained in the formed second control instruction. For example, the structure of the second control instruction formed at this time is as shown in FIG. 6C. After receiving the second control instruction, the MCU in the closed system can extract the first mapping instruction data from the second control instruction, and therefore learn the target operation to be performed by the vehicle.

After learning the target operation to be performed by the vehicle, the MCU can transmit the decrypted control data included in the second control instruction to the CAN bus, so that the corresponding executing component acquires the decrypted control data from the CAN bus, and then execute the corresponding target operation.

The interaction between the open system and the security chip may sometimes be disturbed, resulting in an incomplete first control instruction received by the security chip, thereby leading to subsequent security authentication failure. In order to prevent this from happening, in an alternative embodiment of the present application, the security chip may first determine whether the transmission of the first control instruction is normal before decrypting the encrypted control data in the first control instruction. The encrypted control data in the first control instruction is decrypted only when it is determined that the transmission of the first control instruction is normal.

For example, before transmitting the first control instruction to the security chip, the open system first calculates the parity check code of the first control instruction, and appends the parity check code to the tail of the first control instruction to form a signaling which is then transmitted to the security chip. After receiving the signaling, the security chip can extract information other than the tail information and calculate the parity check code of the information. When the calculated parity check code is consistent with the parity check code included in the tail information, it indicates that the transmission of the first control instruction is normal. Otherwise, it indicates that the transmission of the first control instruction is abnormal.

When it is determined that the transmission of the first control instruction is abnormal, the security chip may transmit a first retransmission instruction to the open system, wherein the first retransmission instruction may be used to instruct the open system to retransmit the first control instruction.

Through this implementation, it is possible to avoid the decryption failure of the security chip, caused by the transmission disturbance to the first control instruction that is originally legal, thereby further improving the accuracy and reliability of the security authentication.

The above describes the interaction process among the user terminal, the server, the open system, the security chip, and the closed system when the user intends to remotely control the vehicle operation through the user terminal. In other embodiments of the present application, the closed system may also feed vehicle information, such as execution result data for the target operation, back to the server via the security chip and the open system, as described below.

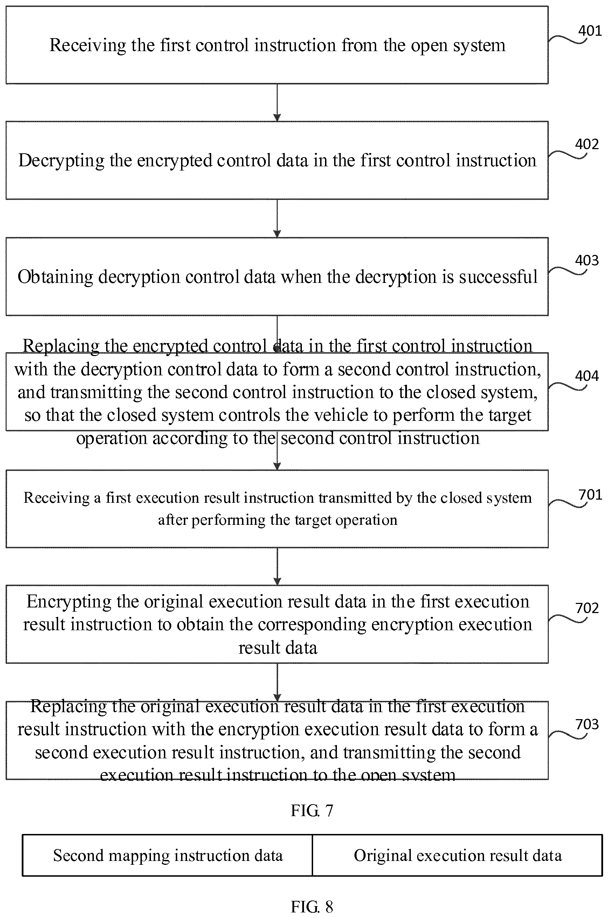

FIG. 7 is a flowchart of a method for vehicle safety communication according to another exemplary embodiment, wherein the method may be applied to a security chip, for example, the security chip 306 shown in FIG. 2. As shown in FIG. 7, on the basis of the method shown in FIG. 4, the method may further include the following steps.

In step S701, a first execution result instruction transmitted by the closed system (for example, the closed system 302 shown in FIG. 2) after performing the target operation is received, wherein the first execution result instruction may include original execution result data for the target operation.

The MCU in the closed system can obtain the original execution result data from the CAN bus, and the original execution result data can be the execution result data that the corresponding executing component feeds back to the MCU after performing the target operation. For example, when the original control data instructs the vehicle to perform an unlocking operation, the unlocking component may feed the unlocking result back to the CAN bus after the vehicle is unlocked. At this time, the MCU can monitor the data from the CAN bus and generate the first execution result instruction, and then make the data, as the original execution result data, be contained in the first execution result instruction, and transmit the first execution result instruction to the security chip.

Optionally, the MCU may further generate second mapping instruction data after the data is monitored, wherein the second mapping instruction data may be used to identify the type of the original execution result data. For example, if the data monitored by the MCU is the unlocking result data from the unlocking component, the second mapping instruction data generated by the MCU may be used to identify that the type of the original execution result data is an unlocking result. The MCU may make the second mapping instruction data be contained in the first execution result instruction, such as the first execution result instruction shown in FIG. 8, so that while the first execution result instruction is transmitted to the server in the future, the server can learn the type of the original execution result data through the second mapping instruction data, thereby preforming corresponding processing.

In step S702, the original execution result data in the first execution result instruction is encrypted to obtain the corresponding encryption execution result data.

As previously mentioned, the server and the security chip can have a pre-agreed encryption protocol, so that the security chip can encrypt the original execution result data in the received first execution result instruction according to the encryption protocol, and obtain the encryption execution result data.

In step S703, the original execution result data in the first execution result instruction is replaced with the encryption execution result data to form a second execution result instruction, and the second execution result instruction is transmitted to the open system.

After receiving the second execution result instruction from the security chip, the open system can forward it to the server for decryption processing by the server.

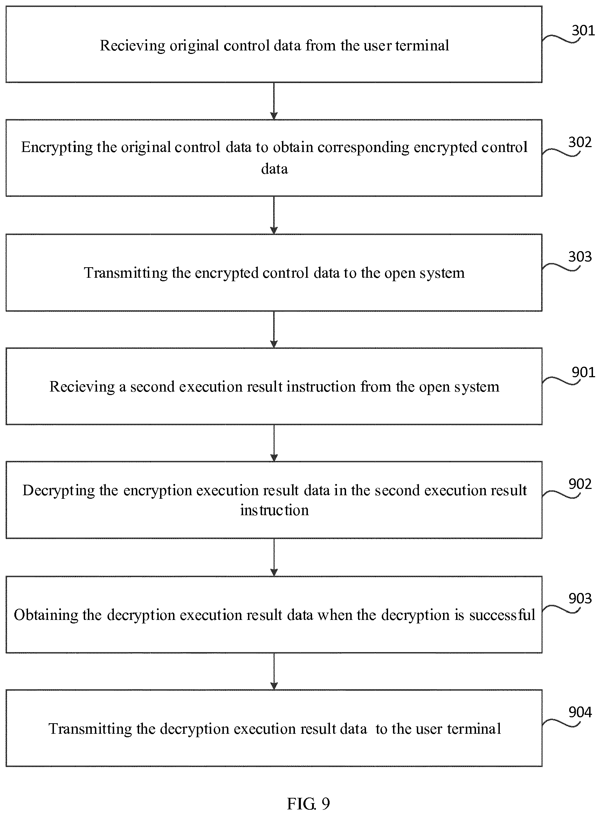

FIG. 9 is a flowchart of another method for vehicle safety communication according to another exemplary embodiment, wherein the method may be applied to a server, for example, the server 200 shown in FIG. 1. As shown in FIG. 9, based on the method shown in FIG. 3, the method may further include the following steps.

In step S901, a second execution result instruction from the open system is received, wherein the second execution result instruction is forwarded from the security chip by the open system, and the second execution result instruction includes the encryption execution result data.

In step S902, the encryption execution result data in the second execution result instruction is decrypted.

As described above, the server and the security chip can have a pre-agreed encryption protocol, so that the server can decrypt the encryption execution result data in the received second execution result instruction according to the encryption protocol.

In step S903, when the decryption is successful, the decryption execution result data is obtained.

In step S904, the decryption execution result data is transmitted to the user terminal to inform the user terminal about the execution result of the target operation.

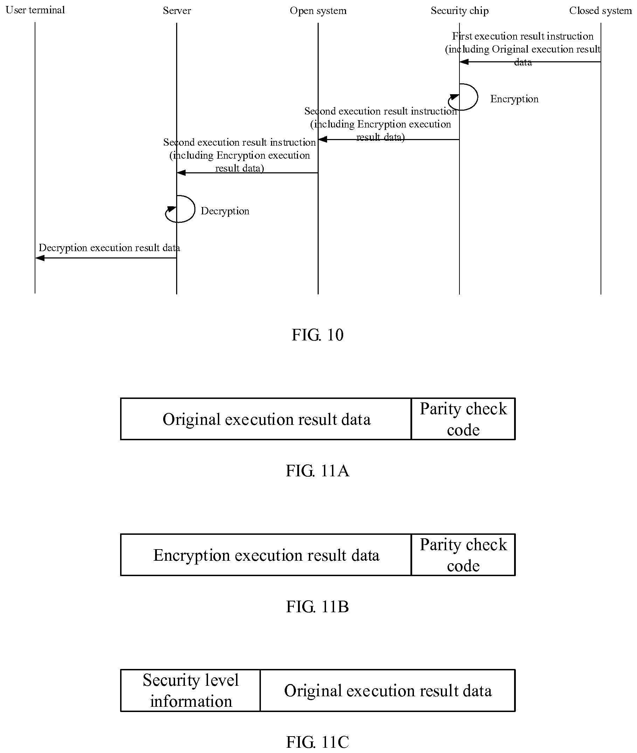

FIG. 10 is a diagram showing a signaling interaction among a user terminal, a server, an open system, a security chip, and a closed system during vehicle communication, according to another exemplary embodiment. Wherein, the user terminal is, for example, the user terminal 100 shown in FIG. 1, the server is, for example, the server 200 shown in FIG. 1, the open system is, for example, the open system 301 shown in FIG. 2, the security chip is, for example, the security chip 306 shown in FIG. 2, and the closed system is, for example, the closed system 302 shown in FIG. 2. FIG. 10 relates to the steps in the above-described vehicle safety communication method for a server and for a security chip, and thus, its specific signaling interaction process will not be described in detail herein.

In the above technical solution, the execution result data from the closed system is encrypted by the security chip, the encryption execution result data is transmitted to the server through the open system, and the server performs decryption processing on the encryption execution result data. Only when the decryption is successful, the server can get the execution result data from the closed system. Thus, it is possible to prevent the illegal server owner from learning the vehicle information, thereby ensuring the safety of the vehicle information.

In some alternative embodiments, the MCU in the closed system may calculate the parity check code of the original execution result data after acquiring the original execution result data. Subsequently, the closed system can make it be contained in the first execution result instruction together with the original execution result data. For example, the structure of the first execution result instruction at this time can be as shown in FIG. 11A. After receiving the first execution result instruction, the security chip may first encrypt the original execution result data therein to obtain the encryption execution result data. Then, the original execution result data in the first execution result instruction is replaced with the encryption execution result data to form the second execution result instruction, and the second execution result instruction is transmitted to the open system. For example, the structure of the second execution result instruction at this time may be as shown in FIG. 11B. After the open system forwards the second execution result instruction to the server, the server may first decrypt the encryption execution result data therein, and if the decryption is successful, the decryption execution result data can be obtained. In theory, the decryption execution result data should be identical to the original execution result data, and therefore, the parity check codes of both should be the same. When the parity check code included in the second execution result instruction is consistent with the parity check code of the decryption execution result data, at this time, the server may determine that the received second execution result instruction is legal, wherein the decryption execution result data is from real vehicle data of the vehicle.

In addition, in some alternative embodiments, the original execution result data acquired by the MCU in the closed system may have different security levels, wherein the security level information may be used to indicate whether the original execution result data is sensitive data. In this case, after generating the first execution result instruction, the MCU may make the security level information of the original execution result data be contained in the first execution result instruction. For example, the structure of the first execution result instruction at this time may be as shown in the FIG. 11C. In this way, after receiving the first execution result instruction, the security chip can determine whether the original execution result data is sensitive data based on the security level information. In one embodiment, the security chip may encrypt the original execution result data regardless of the security level of the original execution result data. Alternatively, in another embodiment, when the security level information indicates that the original execution result data is sensitive data, the security chip encrypts the original execution result data in the first execution result instruction to obtain the corresponding encryption execution result data. That is, the encryption processing operation is only for sensitive data. When the security level information of the original execution result data indicates that the original execution result data is non-sensitive data, the security chip may not encrypt the original execution result data.

When the security level information of the original execution result data indicates that the original execution result data is sensitive data, the security chip may generate the second execution result instruction, wherein the second execution result instruction may include the security level information of the original execution result data and the encryption execution result data. When the security level information of the original execution result data indicates that the original execution result data is non-sensitive data, the security chip may directly forward the first execution result instruction to the open system. After receiving the instruction forwarded by the open system, the server may determine whether the data included in the instruction is encrypted or not (i.e., original) by analyzing the security level information therein. When the security level information indicates that the original execution result data is sensitive data, the server can determine that the second execution result instruction is received, and decrypt the encryption execution result data therein. When the security level information indicates that the original execution result data is non-sensitive data, the server can determine that the first execution result instruction is received, and can directly transmit the original execution result data to the user terminal.

In addition, the interaction between the server and the open system, the interaction between the open system and the security chip, and the interaction between the security chip and the MCU in the closed system may sometimes be disturbed, resulting in an incomplete first execution result instruction received by the security chip or an incomplete second execution result instruction received by the server, thereby leading to subsequent decryption failure. In order to prevent this from happening, in an alternative embodiment of the present application, the security chip may first determine whether the transmission of the first execution result instruction is normal before performing encryption processing on the original execution result data in the first execution result instruction. The original execution result data in the first execution result instruction is encrypted only when it is determined that the transmission of the first execution result instruction is normal.

For example, before transmitting the first execution result instruction to the security chip, the closed system first calculates a parity check code of the first execution result instruction, and appends the parity check code to the tail of the first execution result instruction to form a signaling which is then transmitted to the security chip. After receiving the signaling, the security chip can extract information other than the tail information and calculate the parity check code of the information. When the calculated parity check code is consistent with the parity check code included in the tail information, it indicates that the transmission of the first execution result instruction is normal. Otherwise, it indicates that the transmission of the first execution result instruction is abnormal.

When it is determined that the transmission of the first execution result instruction is abnormal, the security chip may transmit a second retransmission instruction to the closed system, wherein the second retransmission instruction may be used to instruct the closed system to retransmit the first execution result instruction.

In addition, at the server side, it is possible to first determine whether the transmission of the second execution result instruction is normal before decrypting the encryption execution result data in the received second execution result instruction. The encryption execution result data in the second execution result instruction is decrypted only when it is determined that the transmission of the second execution result instruction is normal.

For example, before transmitting the second execution result instruction to the open system, the security chip may first calculate a parity check code of the second execution result instruction, and append the parity check code to the tail of the second execution result instruction to form a signaling which is then transmitted to the open system. After receiving the signaling, the open system can extract information other than the tail information and calculate the parity check code of the information. When the calculated parity check code is consistent with the parity check code included in the tail information, it indicates that the transmission of the second execution result instruction between the security chip and the open system is normal. Otherwise, it indicates that the transmission of the second execution result instruction between the security chip and the open system is abnormal.

When the transmission of the second execution result instruction between the security chip and the open system is normal, the open system can directly forward the signaling to the server. After receiving the signaling, the server may extract information other than the tail information and calculate a parity check code of the information. When the calculated parity check code is consistent with the parity check code included in the tail information, it indicates that the transmission of the second execution result instruction between the server and the open system is normal. Otherwise, it indicates that the transmission of the second execution result instruction between the server and the open system is abnormal.

When the transmission of the second execution result instruction between the security chip and the open system is abnormal, the open system may transmit a third retransmission instruction to the security chip, wherein the third retransmission instruction is used to instruct the security chip to retransmit the second execution result instruction. When the transmission of the second execution result instruction between the server and the open system is abnormal, the server may transmit a fourth retransmission instruction to the open system, wherein the fourth retransmission instruction is used to instruct the open system to retransmit the second execution result instruction.

Through this implementation, it is possible to avoid the decryption failure of the server, caused by the transmission disturbance to the execution result instruction that is originally legal, thereby further improving the accuracy and reliability of the security authentication.

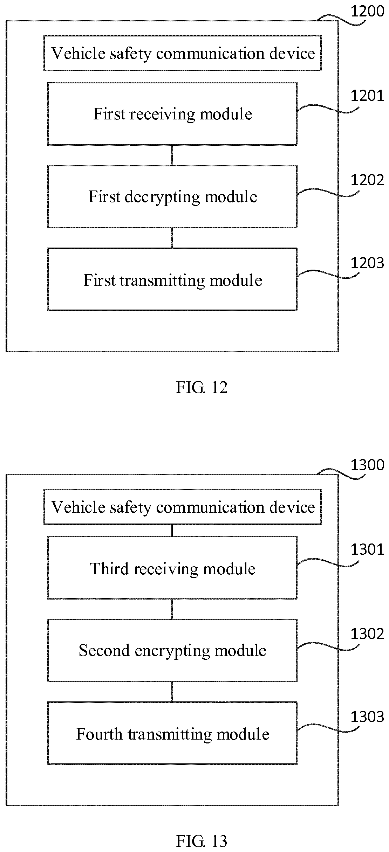

FIG. 12 is a block diagram of a vehicle safety communication device 1200 according to an exemplary embodiment, wherein the device 1200 may be configured in a security chip, such as, for example, the security chip 306 shown in FIG. 2. As shown in FIG. 12, the device 1200 can include: a first receiving module 1201 configured to receive a first control instruction from an open system, wherein the first control instruction includes encrypted control data; a first decrypting module 1202 configured to decrypt the encrypted control data in the first control instruction, and obtain decrypted control data when the decryption is successful; and a first transmitting module 1203 configured to replace the encrypted control data in the first control instruction with the decrypted control data to form a second control instruction, and transmit the second control instruction to a closed system to make the closed system control the vehicle to perform a target operation according to the second control instruction.

Optionally, the device 1200 may further include a second transmitting module configured to transmit a restart instruction and/or an anti-virus instruction to the open system when the number of times of decryption failure reaches a preset number of times, wherein the restart instruction is used to control the open system to perform a restart operation, and the anti-virus instruction is used to control the open system to perform an anti-virus operation.

Optionally, the first control instruction further includes a parity check code associated with the original control data corresponding to the encrypted control data prior to be encrypted. The device 1200 may further include a first calculating module configured to calculate a parity check code of the decrypted control data, and the first transmitting module 1203 is configured to, when the parity check code included in the first control instruction is consistent with the parity check code of the decrypted control data, replace the encrypted control data in the first control instruction with the decrypted control data to form a second control instruction, and transmit the second control instruction to the closed system.

Optionally, the device 1200 may further include a first determining module configured to determine whether the transmission of the first control instruction is normal, and the first decrypting module 1202 is configured to decrypt the encrypted control data in the first control instruction when the first determining module determines that the transmission of the first control instruction is normal.

Optionally, the device 1200 may further include: a second receiving module configured to receive a first execution result instruction transmitted by the closed system after performing the target operation, wherein the first execution result instruction includes original execution result data for the target operation; a first encrypting module configured to encrypt the original execution result data to obtain corresponding encryption execution result data; and a third transmitting module configured to replace the original execution result data in the first execution result instruction with the encryption execution result data to form a second execution result instruction, and transmit the second execution result instruction to the open system.

Optionally, the first execution result instruction further includes security level information of the original execution result data, wherein the security level information is used to indicate whether the original execution result data is sensitive data; and the first encrypting module is configured to, when the security level information indicates that the original execution result data is sensitive data, encrypt the original execution result data to obtain the corresponding encryption execution result data.

Optionally, the device 1200 may further include a second determining module configured to determine whether the transmission of the first execution result instruction is normal; the first encrypting module is configured to, when the second determining module determines that the transmission of the first execution result instruction is normal, encrypt the original execution result data to obtain the corresponding encryption execution result data.

FIG. 13 is a block diagram of a vehicle safety communication device 1300 according to another exemplary embodiment, wherein the device 1300 may be configured in a server, for example, the server 200 shown in FIG. 1. As shown in FIG. 13, the device 1300 may include: a third receiving module 1301 configured to receive original control data from a user terminal, wherein the original control data is used to indicate a target operation to be performed by the vehicle; a second encrypting module 1302 configured to encrypt the original control data to obtain corresponding encrypted control data; and a fourth transmitting module 1303 configured to transmit the encrypted control data to the open system.

Optionally, the device 1300 may further include: a second calculating module configured to calculate a parity check code of the original control data; and a fifth transmitting module configured to transmit a parity check code of the original control data to the open system.

Optionally, the device 1300 may further include a security level information determining module configured to determine security level information of the original control data, wherein the security level information is used to indicate whether the original control data is sensitive data, and the second encrypting module 1302 is configured to, when the security level information indicates that the original control data is sensitive data, encrypt the original control data to obtain the corresponding encrypted control data.

Optionally, the device 1300 may further include: a fourth receiving module configured to receive an execution result instruction from the open system, wherein the execution result instruction is forwarded from the security chip by the open system, and the execution result instruction includes encryption execution result data; a second decrypting module configured to decrypt the encryption execution result data in the execution result instruction, and obtain decryption execution result data when the decryption is successful; and a sixth transmitting module configured to transmit the decryption execution result data to the user terminal to inform the user terminal about an execution result of the target operation.

Optionally, the execution result instruction further includes a parity check code associated with the original execution result data corresponding to the encryption execution result data prior to be encrypted; the device 1300 may further include a third calculating module configured to calculate a parity check code of the decryption execution result data; and the sixth transmitting module is configured to, when the parity check code included in the execution result instruction is consistent with the parity check code of the decryption execution result data, transmit the decryption execution result data to the user terminal.

Optionally, the device 1300 may further include a third determining module configured to determine whether the transmission of the execution result instruction is normal, and the second decrypting module is configured to, when the third determining module determines that the transmission of the execution result instruction is normal, decrypt the encryption execution result data in the execution result instruction.

In the above technical solution, the encrypted control data is transmitted to the open system of the vehicle by the server, and the encrypted control data can be forwarded to the security chip by the open system in order to perform decryption processing by the security chip. Only after the decryption succeeds, the decrypted control data is transmitted to the closed system, and then the closed system will control the vehicle to perform the corresponding operation according to the control data. Thus, the safety of internet of vehicle communication can be improved, and only legal control data can be transmitted to the closed system to prevent the vehicle from being erroneously controlled due to the invasion of the malicious program, thereby ensuring the safety of the vehicle remote control.

With regard to the device in the above embodiments, the specific manner in which the respective modules perform the operations has been described in detail in the embodiment relating to the method, and will not be explained in detail herein.

The preferred embodiments of the present application have been described in detail above with reference to the accompanying drawings. However, the present application is not limited to the specific details in the foregoing embodiments, and various simple modifications may be made to the technical solutions of the present application within the technical concept of the present application. These simple variations are within the scope of the present application.

It should be further noted that the specific technical features described in the above specific embodiments may be combined in any suitable manner without contradiction. In order to avoid unnecessary repetition, the present application will not be further described in various possible combinations.

In addition, any combination of various embodiments of the present application may be made as long as it does not contradict the idea of the present application, and it should also be regarded as the content disclosed in the present application.

## Claims

1. A vehicle safety communication method, wherein the vehicle comprises an open system, a security chip and a closed system, the open system and the closed system are connected by the security chip, the method is applied to the security chip, and the method comprises:
receiving a first control instruction from the open system, wherein the first control instruction comprises encrypted control data;
decrypting the encrypted control data in the first control instruction;
obtaining decrypted control data when the decryption is successful; and
replacing the encrypted control data in the first control instruction with the decrypted control data to form a second control instruction, and transmitting the second control instruction to the closed system to make the closed system control the vehicle to perform a target operation according to the second control instruction.

2. The method according to claim 1, wherein the method further comprises:
transmitting a restart instruction and/or an anti-virus instruction to the open system when the number of times of decryption failure reaches a preset number of times, wherein the restart instruction is used to control the open system to perform a restart operation, and the anti-virus instruction is used to control the open system to perform an anti-virus operation.

3. The method according to claim 1, wherein the first control instruction further comprises a parity check code associated with the original control data corresponding to the encrypted control data prior to be encrypted;
the method further includes:
calculating a parity check code of the decrypted control data;
determining whether the parity check code included in the first control instruction is consistent with the parity check code of the decrypted control data; and
when the parity check code included in the first control instruction is consistent with the parity check code of the decrypted control data, performing the step of replacing the encrypted control data in the first control instruction with the decrypted control data to form the second control instruction, and transmitting the second control instruction to the closed system.

4. The method according to claim 1, wherein the method further comprises:
determining whether the transmission of the first control instruction is normal; and
performing the step of decrypting the encrypted control data in the first control instruction when it is determined that the transmission of the first control instruction is normal.

5. The method according to any one of claims 1 to 4, wherein the method further comprises:
receiving a first execution result instruction transmitted by the closed system after performing the target operation, wherein the first execution result instruction includes original execution result data for the target operation;
encrypting the original execution result data to obtain corresponding encryption execution result data; and
replacing the original execution result data in the first execution result instruction with the encryption execution result data to form a second execution result instruction, and transmitting the second execution result instruction to the open system.

6. The method according to claim 5, wherein the first execution result instruction further comprises a parity check code associated with the original execution result data.

7. The method according to claim 5, wherein the first execution result instruction further comprises security level information of the original execution result data, wherein the security level information is used to indicate whether the original execution result data is sensitive data; and
the step of encrypting the original execution result data to obtain the corresponding encryption execution result data includes:
when the security level information indicates that the original execution result data is sensitive data, encrypting the original execution result data to obtain the corresponding encryption execution result data.

8. The method according to claim 5, wherein the method further comprises:
determining whether the transmission of the first execution result instruction is normal; and
when it is determined that the transmission of the first execution result instruction is normal, performing the step of encrypting the original execution result data to obtain the corresponding encryption execution result data.

9. A vehicle safety communication method, wherein the vehicle comprises an open system, a security chip and a closed system, the open system and the closed system are connected by the security chip, the open system is connected to a server, the method is applied to the server, and the method includes:
receiving original control data from a user terminal, wherein the original control data is used to indicate a target operation to be performed by the vehicle;
encrypting the original control data to obtain corresponding encrypted control data; and
transmitting the encrypted control data to the open system.

10. The method according to claim 9, wherein the method further comprises:
calculating a parity check code of the original control data; and
transmitting the parity check code of the original control data to the open system.

11. The method according to claim 9, wherein the method further comprises:
determining security level information of the original control data, wherein the security level information is used to indicate whether the original control data is sensitive data;
determining whether the security level information indicates that the original control data is sensitive data; and
when the security level information indicates that the original control data is sensitive data, performing the step of encrypting the original control data to obtain the corresponding encrypted control data.

12. The method according to any one of claims 9 to 11, wherein the method further comprises:
receiving an execution result instruction from the open system, wherein the execution result instruction is forwarded by the open system from the security chip, and the execution result instruction includes encryption execution result data;
decrypting the encryption execution result data in the execution result instruction;
obtaining decryption execution result data when the decryption is successful; and
transmitting the decryption execution result data to the user terminal to inform the user terminal about an execution result of the target operation.

13. The method according to claim 12, wherein the execution result instruction further comprises a parity check code associated with the original execution result data corresponding to the encryption execution result data prior to be encrypted; and
the method further includes:
calculating a parity check code of the decryption execution result data;
determining whether the parity check code included in the execution result instruction is consistent with the parity check code of the decryption execution result data; and
when the parity check code included in the execution result instruction is consistent with the parity check code of the decryption execution result data, performing the step of transmitting the decryption execution result data to the user terminal.

14. The method according to claim 12, wherein the method further comprises:
determining whether the transmission of the execution result instruction is normal; and
when it is determined that the transmission of the execution result instruction is normal, performing the step of decrypting the encryption execution result data in the execution result instruction.

15. A vehicle safety communication device, wherein the vehicle comprises an open system, a security chip and a closed system, the open system and the closed system are connected by the security chip, the device is provided in the security chip, and the device comprises:
a first receiving module, configured to receive a first control instruction from the open system, wherein the first control instruction includes encrypted control data;
a first decrypting module, configured to decrypt the encrypted control data in the first control instruction, and obtain decrypted control data when the decryption is successful; and
a first transmitting module, configured to replace the encrypted control data in the first control instruction with the decrypted control data to form a second control instruction, and transmit the second control instruction to the closed system to make the closed system control the vehicle to perform a target operation according to the second control instruction.

16. The device according to claim 15, wherein the device further comprises:
a second transmitting module, configured to transmit a restart instruction and/or an anti-virus instruction to the open system when the number of times of decryption failure reaches a preset number of times, wherein the restart instruction is used to control the open system to perform a restart operation, and the anti-virus instruction is used to control the open system to perform an anti-virus operation.

17. The device according to claim 15, wherein the first control instruction further comprises a parity check code associated with original control data corresponding to the encrypted control dataprior to be encrypted;
the device further includes:
a first calculating module, configured to calculate a parity check code of the decrypted control data; and
the first transmitting module is configured to, when the parity check code included in the first control instruction is consistent with the parity check code of the decrypted control data, replace the encrypted control data in the first control instructions with the decrypted control data to form a second control instruction, and transmit the second control instruction to the closed system.

18. The device according to claim 15, wherein the device further comprises:
a first determining module, configured to determine whether the transmission of the first control instruction is normal; and
the first decrypting module is configured to, when the first determining module determines that the transmission of the first control instruction is normal, decrypt the encrypted control data in the first control instruction.

19. The device according to any one of claims 15 to 18, wherein the device further comprises:
a second receiving module, configured to receive a first execution result instruction transmitted by the closed system after performing the target operation, wherein the first execution result instruction includes original execution result data for the target operation;
a first encrypting module, configured to encrypt the original execution result data to obtain corresponding encryption execution result data; and
a third transmitting module, configured to replace the original execution result data in the first execution result instruction with the encryption execution result data to form a second execution result instruction, and transmit the second execution result instruction to the open system.

20. The device according to claim 19, wherein the first execution result instruction further comprises a parity check code associated with the original execution result data.

21. The device according to claim 19, wherein the first execution result instruction further comprises security level information of the original execution result data, wherein the security level information is used to indicate whether the original execution result data is sensitive data; and
the first encrypting module is configured to, when the security level information indicates that the original execution result data is sensitive data, encrypt the original execution result data to obtain the corresponding encryption execution result data.

22. The device according to claim 19, wherein the device further comprises:
a second determining module, configured to determine whether the transmission of the first execution result instruction is normal; and
the first encrypting module is configured to, when the second determining module determines that the transmission of the first execution result instruction is normal, encrypt the original execution result data to obtain the corresponding encryption execution result data.

23. A vehicle safety communication device, wherein the vehicle comprises an open system, a security chip and a closed system, the open system and the closed system are connected by the security chip, the open system is connected to a server, the device is provided in the server, and the device comprises:
a third receiving module, configured to receive original control data from a user terminal, wherein the original control data is used to indicate a target operation to be performed by the vehicle;
a second encrypting module, configured to encrypt the original control data to obtain corresponding encrypted control data; and
a fourth transmitting module, configured to transmit the encrypted control data to the open system.

24. The device according to claim 23, wherein the device further comprises:
a second calculating module, configured to calculate a parity check code of the original control data; and
a fifth transmitting module, configured to transmit the parity check code of the original control data to the open system.

25. The device according to claim 23, wherein the device further comprises:
a security level information determining module, configured to determine security level information of the original control data, wherein the security level information is used to indicate whether the original control data is sensitive data; and
the second encrypting module is configured to, when the security level information indicates that the original control data is sensitive data, encrypt the original control data to obtain the corresponding encrypted control data.

26. The device according to any one of claims 23 to 25, wherein the device further comprises:
a fourth receiving module, configured to receive an execution result instruction from the open system, wherein the execution result instruction is forwarded by the open system from the security chip, and the execution result instruction includes encryption execution result data;
a second decrypting module, configured to decrypt the encryption execution result data in the execution result instruction, and obtain decryption execution result data when the decryption is successful; and
a sixth transmitting module, configured to transmit the decryption execution result data to the user terminal to inform the user terminal about an execution result of the target operation.

27. The device according to claim 26, wherein the execution result instruction further comprises a parity check code associated with the original execution result data corresponding to the encryption execution result data prior to be encrypted;
the device further includes:
a third calculating module, configured to calculate a parity check code of the decryption execution result data; and
the sixth transmitting module is configured to, when the parity check code included in the execution result instruction is consistent with the parity check code of the decryption execution result data, transmit the decryption execution result data to the user terminal.

28. The device according to claim 27, wherein the device further comprises:
a third determining module, configured to determine whether the transmission of the execution result instruction is normal; and
the second decrypting module is configured to, when the third determining module determines that the transmission of the execution result instruction is normal, decrypt the encryption execution result data in the execution result instruction.

29. A vehicle multimedia system, wherein the vehicle multimedia system comprises:
an open system for connecting a vehicle to a network and communicating with a server, the open system is used for receiving encrypted control data from the server and transmitting a first control instruction including the encrypted control data;
a security chip comprising the vehicle safety communication device according to any one of claims 15-22; and
a closed system communicating with the open system via the security chip, the closed system is used for receiving a second control instruction from the security chip, and controlling the vehicle to perform a target operation according to the second control instruction.

30. A vehicle, wherein the vehicle comprises a vehicle multimedia system according to claim 29.
